# EUROPÄISCHE PATENTSCHRIFT

(11) **EP 1 681 606 B1**
(45) Veröffentlichungstag und Bekanntmachung des Hinweises auf die Patenterteilung: **16.05.2007**
(21) Anmeldenummer: 05024644.6
(22) Anmeldetag: 11.11.2005
(51) Int. Cl.: G05B 19/00, B60W 50/02

(54) **Verfahren zur Steuerung eines Antriebsaggregates für ein Kraftfahrzeug**
Control method for a motor vehicle drive train
Procédé de contrôle d'un groupe motopropulseur de véhicule automobile

(30) Priorität: 13.01.2005 DE 102005001522
(43) Veröffentlichungstag der Anmeldung: 19.07.2006
(73) Patentinhaber: ZF FRIEDRICHSHAFEN AG, 88038 Friedrichshafen (DE)
(72) Erfinder: Reisch, Bernhard, 88316 Isny (DE); Schmidtner, Peter, 88131 Lindau (DE); Sauter, Frank, 88074 Meckenbeuren (DE)

(56) Entgegenhaltungen:
- EP-A- 0 434 986
- DE-A1- 10 141 794
- US-A- 4 720 810
- US-A- 4 953 529
- US-A1- 2004 122 541

## Beschreibung

Die Erfindung betrifft ein Verfahren zur Steuerung eines Antriebsaggregates für ein Kraftfahrzeug gemäß dem Oberbegriff des Anspruchs 1.

Es ist allgemein bekannt, dass in Fahrzeugen Antriebsaggregate genutzt werden, deren Ist-Zustand mittels Sensoren und Sensorleitungen von einer Steuerungs- und Regelungsvorrichtung erfassbar ist. Diese Steuerungs- und Regelungsvorrichtung steht zudem mit ansteuerbaren Aktuatoren über Steuerungsleitungen in Verbindung, mit deren Hilfe die Ist-Werte auf diesbezügliche Soll-Werte gesteuert oder geregelt werden.

Insbesondere für Nutzfahrzeuge mit Betriebsbremsen, die in der Regel als Reibungsbremsen ausgebildet sind, werden zusätzliche verschleißfreie Bremsverzögerungseinrichtungen gefordert und von den Fahrzeugherstellern in das Fahrzeug eingebaut. Solche Bremsverzögerungseinrichtungen werden als Retarder bzw. Motorbremsen verwendet, um die Fahrzeuggeschwindigkeit beispielsweise bei einem Fahrbahngefälle konstant zu halten.

Unter Retardern werden vor allem hydrodynamische, hydrostatische oder elektrodynamische Bremseinrichtungen verstanden. Diese Retarder werden besonders bei Nutzfahrzeugen eingesetzt, um die beispielsweise beim Bremsen aus hoher Fahrgeschwindigkeit auftretende kinetische Verzögerungsenergie aufzunehmen und in Wärme umzusetzen. Sie sind aber auch für Dauerbremsleistungen, etwa bei lang andauernder Bergabfahrt, geeignet.

Ein derartiger Retarder mit hydraulischem Steuerungskonzept ist aus der DE 101 41 794 A1 bekannt. Bei diesem hydrodynamischen Retarder sind zwei Sensoren an eine Steuerungs- und Regelungseinheit angeschlossen. Ein Temperatursensor dient der Temperaturüberwachung und ein Drucksensor ist zur Überwachung des Regeldruckes im Retarder vorgesehen.

Bekannt sind auch Retarder, bei denen aus Komplexitäts- und Kostengründen zwei identische Aktuatoren verwendet werden, nämlich einen für die Regelung des Retarderdrucks und einen für die Schnell- bzw. Sicherheitsabschaltung. Da beide Aktuatoren direkt nebeneinander im Retardergehäuse montiert sind und der Anschluss an die elektronische Retardersteuerungsvorrichtung mittels eines gemeinsamen Kabelbaumes erfolgt, besteht die Gefahr, dass beim Anschluss der Aktuatoren die Stecker vertauscht werden und somit die Retarderfunktion gestört ist. Das gleiche Problem kann auch beim Einsatz von zwei identischen Temperatursensoren auftreten, mit denen unterschiedliche Temperaturen gemessen werden.

Bei heutigen Retardersystemen gibt es verschiedene Möglichkeiten, einen falschen Anschluss der Aktuatoren bzw. Sensoren an der Steuerungs- und Regelungsvorrichtung zu vermeiden. Eine Möglichkeit besteht darin, konstruktiv unterschiedliche Stecker und Anschlüsse an den Aktuatoren bzw. Sensoren einzusetzen, also beispielsweise verschiedene Typen, unterschiedliche Größen, Codierung der Stecker durch z.B. angebrachte Nasen und dergleichen.

Einen weiteren Ausweg bieten unterschiedliche Längen der einzelnen Leitungen der Verkabelung. Dabei lässt eine korrekt verlegte Verkabelung bei identischen Anschlüssen nicht zu, dass die Stecker angeschlossen werden können, wenn eine Anschlussbuchse falsch ist, etwa weil ein Abzweig der Verkabelung dann zu kurz ist.

Darüber hinaus können optische Markierungen, beispielsweise unterschiedliche Farben an den Steckern und den Aktuatoren genutzt werden, um eine Vertauschung zu verhindern. Dies erfordert aber wiederum hinsichtlich ihrer Farbe unterschiedliche Aktuatoren und Stecker, welches bei einem Fahrzeughersteller den Lagerhaltungsaufwand und damit die Herstellkosten vergrößert.

Besteht nicht die Möglichkeit, durch Form, Markierungen oder durch Kabellängen einen richtigen Anschluss der Aktuatoren bzw. Sensoren sicherzustellen, so muss in jedem Fall das System in Betrieb genommen und geprüft werden, ob die Verkabelung in Ordnung ist.

Im einfachsten Fall kann die elektronische Steuerung des Retarderaggregates bei eingeschalteter Zündung und stehendem Fahrzeug die angeschlossenen Komponenten vermessen, etwa durch Widerstandsmessung, die Messwerte plausibilisieren und gegebenenfalls einen Fehler durch Fehleranzeige, Fehlerspeichereintrag usw. melden. Die Prüfung und Meldung eines Fehlers kann alternativ auch durch ein Diagnose-Gerät erfolgen. Dieses Vorgehen erfordert aber immer, dass jedes Aggregat erst in Betrieb genommen, z.B. durch Auslesen des Fehlerspeichers gezielt geprüft und anschließend, falls notwendig, die Zuordnung der an die Komponenten angeschlossenen Stecker geändert wird. Nachteilig hierbei ist vor allem der erforderliche Zeitaufwand.

Bei manchen Systemen besteht nur eine hälftige Chance, die beiden Aktuatoren systemgerecht anzuschließen, insbesondere wenn diese identisch sind. Eine reine Vermessung der Aktuatoren bei Fahrzeugstillstand hilft wegen des identischen Innenwiderstandes nicht weiter. Das Gleiche gilt prinzipiell auch beispielsweise für Temperatur- oder Drucksensoren.

Die einzige Möglichkeit, eine Vertauschung der Stecker an den Komponenten zu erkennen, ist eine Plausibilitätsprüfung. Eine Plausibilitätsprüfung ist systemspezifisch und abhängig von den zur Verfügung stehenden Informationen. Die verwendeten Informationen sind im besten Fall Messgrößen, welche durch die elektronische Steuerungsvorrichtung selbst gemessen werden, wie etwa Temperaturen, Drücke, Drehzahlen, Wege oder aber auch dazu alternative Größen, die durch andere Systeme erfasst und bereitgestellt werden. Eine solche Bereitstellung erfolgt heute üblicherweise über einen elektronischen Datenbus (z.B. CAN = Controller Area Network). Es können auch Größen verwendet werden, die von gemessenen Signalen abgeleitet wurden, z.B. Ableitungen erster oder zweiter Ordnung.

Wenn eine Plausibilitätsprüfung im Stillstand des Fahrzeugs nicht aussagekräftig genug ist, muss dies im Fahrbetrieb und eventuell auch bei aktivem Retarderaggregat erfolgen. Dies bedeutet, dass bei der Erstinbetriebnahme des Fahrzeuges am Ende des Montagebandes oder nach einer Reparatur im Kundendienst zwingend eine Probefahrt auf einem Rollenprüfstand oder auf der Straße durchgeführt werden muss. Wird durch die Prüfung ein Fehler erkannt, so muss dieser anschließend behoben werden. Dieser Mehraufwand ist zumindest bei der Erstinbetriebnahme des Fahrzeuges nicht akzeptabel. Ferner besteht die Gefahr, dass diese Prüfung vergessen wird.

Vor diesem Hintergrund liegt der Erfindung liegt die Aufgabe zu Grunde, ein Verfahren zur Steuerung eines Antriebsaggregates, beispielsweise eines Retarders zu schaffen, welches falsche Anschlüsse der Sensoren und/oder Aktuatoren an der elektronischen Steuerungseinheit des Antriebsaggregates erkennt und selbsttätig korrigiert.

Die gestellte Aufgabe wird verfahrensmäßig dadurch gelöst, dass durch eine Plausibilitätsprüfung der elektronischen Steuerungseinheit mittels einer in der Steuerungseinheit integrierten Software erkannt wird, an welchen der Eingänge bzw. Ausgänge der Steuerungseinheit welcher Sensor bzw. Aktuator angeschlossen ist, und dass diese Anschlussanordnung in der Steuerungseinheit berücksichtigt und für den Betrieb des Antriebsaggregats genutzt wird.

Vorzugsweise ist dabei vorgesehen, dass die Anschlusssituation von elektrischen Leitungen der Sensoren bzw. Aktuatoren zur Steuerung und Regelung eines Retarders überprüft wird. Zudem sind auch diesbezügliche Anschlusssituationen überprüfbar, bei denen Sensoren und Aktuatoren einer Kupplung, eines Antriebsmotors und/oder eines Getriebes mit einem Steuerungs- und Regelungsgerät verbunden sind.

Es sei darauf hingewiesen, dass das erfindungsgemäße Verfahren sowohl auf Aktuatorik wie auch auf Sensorik angewendet werden kann. So kann vorgesehen sein, dass die Anschlusssituation von Steuerleitungen zu Aktuatoren zur Steuerung und Regelung des Retarderdruckes und zur Schnell- bzw. Sicherheitsabschaltung, und/oder von Sensorleitungen zur Ermittlung von Temperaturen am Retarder ermittelt wird. Im Folgenden wird aber lediglich auf verwendete Aktuatoren an einem Retarder Bezug genommen.

Demgemäss kann vorgesehen sein, dass durch Zuordnung der Software-Funktionen zu den einzelnen Eingängen bzw. Ausgängen der Steuerungseinheit die darin integrierte Software an die aktuelle Anschlusssituation des Retarders bzw. Antriebsaggregates adaptiert wird.

Nach einer Weiterbildung des erfindungsgemäßen Verfahrens kann die Plausibilitätsprüfung und gegebenenfalls die Adaption der Steuerungseinheit unmittelbar nach Einschalten der Zündung sowie bei Fahrzeugstillstand und laufendem Motor, oder im Fahrbetrieb des Fahrzeuges ausgeführt werden. Andererseits kann auch vorgesehen sein, dass die Plausibilitätsprüfung und gegebenenfalls die Adaption der Steuerungseinheit durch diese in jedem Betriebszyklus erneut ausgeführt wird.

Schließlich wird die von der Steuerungseinheit erkannte Zuordnung der Sensoren bzw. Aktuatoren an die Eingänge bzw. Ausgänge an der Steuerungseinheit in einem nichtflüchtigen Speichermedium dauerhaft gespeichert.

Demgemäss wird bereits bei der ersten Betätigung des Antriebsaggregates bzw. des Retarders durch eine Plausibilitätsprüfung erkannt, ob die Aktuatoren richtig angeschlossen sind. Ist dies nicht der Fall, vertauscht die Software die Zuordnung der Ausgänge des Steuergerätes und speichert dauerhaft die aktuelle Zuordnung, beispielsweise in einem nichtflüchtigen EEPROM. Beim nächsten Einschalten der Zündung des Fahrzeuges ist dann die richtige Zuordnung bereits bekannt und die erneute Plausibilitätsprüfung läuft nur zur Sicherheit im Hintergrund ab, die aber keine kurzzeitige Störung oder Verzögerung der Inbetriebnahme des Fahrzeugs verursacht. Hierdurch wird eine Adaptionsphase auf die Erstinbetriebnahme am Ende des Montagebandes des Fahrzeugherstellers oder im Kundendienstbetrieb beschränkt. Der Endkunde selbst merkt davon nichts. Dennoch wird die Prüfung zur Sicherheit bei jedem Einschalten der Zündung des Fahrzeugmotors durchgeführt.

Nachfolgend wird beispielhaft ein verfahrensgemäßer Ablauf der Plausibilitätsprüfung der Aktuatoranschlüsse an eine elektronische Steuerungseinheit des Retarders eines Nutzfahrzeuges erläutert.

Im Fahrbetrieb, also bei aktivem Retarder, aktiviert die elektronische Retardersteuerung gezielt Aktuatoren des Retarders und kann durch gleichzeitiges Messen der Reaktionen im System, z.B. des Retarderauslassdruckes, feststellen, an welchem Ausgang der Steuerungseinheit welcher Aktuator angeschlossen ist. Durch eventuell notwendiges Vertauschen der Zuordnung der Ausgänge der Steuerungseinheit in der Funktionslogik der Retardersteuerung, falls die Zuordnung nicht richtig war, ist dann automatisch ein ursprünglich falscher Anschluss der Aktuatoren korrigiert.

Damit möglichst keine Störungen bei der ersten Betätigung des Retarders auftreten, legt die elektronische Retardersteuerung diese Zuordnung in einem nichtflüchtigen Speicher, etwa in einem EEPROM, ab und verwendet sie sofort beim nächsten Einschalten der Zündung des Fahrzeugmotors. Eine mögliche kurzzeitige Beeinträchtigung der ersten Retarderbremsung durch die Adaptionsphase wird somit auf ein Minimum reduziert, etwa bei der Erstinbetriebnahme oder in der Kundendienst-Werkstatt.

Durch dieses erfindungsgemäße Verfahren ergeben sich eine Reihe von Vorteilen. Zunächst erfolgt eine Reduzierung oder gar Eliminierung von Anschlussfehlern der Aktuatoren an der elektronischen Steuerungseinheit des Retarders. Des Weiteren können identische Aktuatoren oder auch Sensoren und somit auch Stecker und Steckerbuchsen eingesetzt werden, ohne dass die Gefahr der Vertauschung bei deren Anschluss besteht. Dies verringert die Montagekosten, die Teilevielfalt und die Lagerhaltung. Ferner ist keine spezielle Inbetriebnahme im Hinblick auf den Anschluss der Verkabelung jedes einzelnen Aggregates erforderlich. Daraus ergibt sich eine erhebliche Zeitersparnis und somit eine deutliche Einsparung von Inbetriebnahmekosten des Fahrzeuges.

## Patentansprüche

1. Verfahren zur Steuerung eines Antriebsaggregates für ein Kraftfahrzeug, mit wenigstens zwei Aktuatoren und/oder Sensoren zur Steuerung und Regelung desselben, welche über elektrische Kabel mit einer elektronischen Steuerungseinheit verbunden sind, **dadurch gekennzeichnet, dass** durch eine Plausibilitätsprüfung der elektronischen Steuerungseinheit mittels einer in der Steuerungseinheit integrierten Software erkannt wird, an welchen der Eingängen bzw. Ausgängen der Steuerungseinheit welcher Sensor bzw. Aktuator angeschlossen ist, und dass diese Anschlussanordnung in der Steuerungseinheit berücksichtigt und für den Betrieb des Antriebsaggregats genutzt wird.

2. Verfahren nach Anspruch 1, **dadurch gekennzeichnet, dass** die Anschlusssituation von elektrischen Leitungen zu Aktuatoren bzw. Sensoren zur Steuerung und Regelung eines Retarders, einer Kupplung, eines fahrzeugantriebsmotors und/oder eines Getriebes überprüft wird.

3. Verfahren nach Anspruch 2, **dadurch gekennzeichnet, dass** die Anschlusssituation von Steuerleitungen zu Aktuatoren zur Steuerung und Regelung des Retarderdruckes und zur Schnell- bzw. Sicherheitsabschaltung und/oder von Sensorleitungen zur Ermittlung von Temperaturen am Retarder ermittelt wird.

4. Verfahren nach einem der Ansprüche 1 bis 3, **dadurch gekennzeichnet, dass** durch Zuordnung der Software-Funktionen zu den einzelnen Eingängen bzw. Ausgängen der Steuerungseinheit die darin integrierte Software an die aktuelle Anschlusssituation des Antriebsaggregats adaptiert wird.

5. Verfahren nach einem der Ansprüche 1 bis 4, **dadurch gekennzeichnet, dass** die Plausibilitätsprüfung der Steuerungseinheit unmittelbar nach Einschalten der Zündung sowie bei Fahrzeugstillstand und laufendem Motor, oder im Fahrbetrieb des Fahrzeuges ausgeführt wird.

6. Verfahren nach einem der vorherigen Ansprüche, **dadurch gekennzeichnet, dass** die Plausibilitätsprüfung und gegebenenfalls die Adaption der Steuerungseinheit durch diese Plausibilitätsprüfung in jedem Betriebszyklus erneut ausgeführt wird.

7. Verfahren nach einem der vorherigen Ansprüche, **dadurch gekennzeichnet, dass** die von der Steuerungseinheit erkannte Zuordnung der Sensoren bzw. Aktuatoren an den Eingängen bzw. Ausgängen der Steuerungseinheit in einem nichtflüchtigen elektronischen Speichermedium gespeichert wird.

## Claims

1. The invention relates to a method for the control of a drive unit for a motor vehicle, with at least two actuators and/or sensors for the control of the same, which are linked to an electronic control unit via electric cables, **characterized in that** through a plausibility check of the electronic control unit by means of control-unit-integrated software, the system is capable of recognizing which sensor or actuator is connected to which input or output of the control unit; and that this configuration of connections is considered in the control unit and used for the operation of the drive unit.

2. A method according to claim 1, **characterized in that** the configuration of connections of electric lines to actuators or sensors for the control of a retarder, a clutch, a vehicle's drive motor and/or a transmission is checked.

3. A method according to claim 1, **characterized in that** the configuration of connections of control lines to actuators is determined for the control of the retarder pressure and for emergency or safety shutoff and/or of sensor lines for the determination of temperatures on the retarder.

4. A method according to one of the claims 1 through 3, **characterized in that** through assignment of the software functions to the individual inputs or outputs of the control unit, the CU-integrated software is adapted to the current configuration of connections of the drive unit

5. A method according to one of the claims 1 through 4, **characterize**d **in that** the plausibility check of the control unit takes place immediately after switching-on of the ignition as well as during vehicle standstill with running engine, or during driving operation of the vehicle.

6. A method according to one of the preceding claims, **characterized in that** the plausibility check and, as the case may be, adaptation of the control unit, are carried out due to this plausibility check for each operating cycle again.

7. A method according to one of the preceding claims, **characterized in that** the assignment of sensors or actuators to the inputs or outputs of the control unit as recognized by the control unit is stored in a nonvolatile electronic storage medium.

## Revendications

1. Méthode de commande d'un groupe motopropulseur d'un véhicule automobile, doté d'au moins deux actionneurs et/ou capteurs pour la commande et le réglage du groupe motopropulseur, lesquels sont connectés par des câbles électriques avec une unité de commande électronique, **caractérisée en ce que** par un contrôle de plausibilité de l'unité de commande électronique à l'aide d'un logiciel intégré dans l'unité de commande il est possible d'établir quelle entrée ou quelle sortie de l'unité de commande est connectée à quel capteur ou à quel actionneur, et **en ce que** cet agencement de raccordement est pris en considération dans l'unité de commande et **en ce qu'**il est utilisé pour le fonctionnement du groupe motopropulseur.

2. Méthode selon la revendication 1, **caractérisée en ce que** est vérifié l'état de raccordement des câbles électriques aux actionneurs ou aux capteurs pour la commande ou le réglage d'un ralentisseur, d'un embrayage, d'un moteur de propulsion d'un véhicule et/ou d'une boîte de vitesses.

3. Méthode selon la revendication 1, **caractérisée en ce que** sont déterminés l'état de raccordement des câbles de commande aux actionneurs pour la commande et le réglage de la pression du ralentisseur et pour la coupure rapide ou la coupure de sécurité et/ou de câbles de capteurs pour la détermination de températures au niveau du ralentisseur.

4. Méthode selon une des revendications 1 à 3, **caractérisée en ce que** par l'attribution des fonctions logiciel aux différentes entrées ou sorties de l'unité de commande le logiciel intégré dans celle-ci est adapté à l'état de raccordement actuel du groupe motopropulseur.

5. Méthode selon une des revendications 1 à 4, **caractérisée en ce que** le contrôle de plausibilité de l'unité de commande est exécuté immédiatement après la mise du contact, avec véhicule à l'arrêt et moteur tournant, ou avec véhicule en marche.

6. Méthode selon une des revendications précédentes, **caractérisée en ce que** le contrôle de plausibilité et, le cas échéant, l'adaptation de l'unité de commande au moyen de ce contrôle de plausibilité peuvent être exécutés à nouveau dans chaque cycle de fonctionnement.

7. Méthode selon une des revendications précédentes, **caractérisée en ce que** l'attribution des capteurs ou actionneurs aux entrées ou sorties de l'unité de commande détectée par l'unité de commande est enregistrée sur un support d'enregistrement électronique non volatil.
